# EUROPÄISCHE PATENTSCHRIFT

(11) **EP 2 592 462 B1**
(45) Veröffentlichungstag und Bekanntmachung des Hinweises auf die Patenterteilung: **12.07.2017**
(21) Anmeldenummer: 12188977.8
(22) Anmeldetag: 18.10.2012
(51) Int. Cl.: G02B 21/24, G03H 1/04, G03H 1/08, G03H 1/00, G02B 21/36

(54) **Verfahren und Anordnung zur Autofokussierung eines Mikroskops**
Method and assembly for auto-focussing a microscope
Procédé et agencement pour la mise au point automatique d'un microscope

(30) Priorität: 09.11.2011 DE 102011086018
(43) Veröffentlichungstag der Anmeldung: 15.05.2013
(73) Patentinhaber: Carl Zeiss Microscopy GmbH, 07745 Jena (DE); Carl Zeiss AG, 73447 Oberkochen (DE)
(72) Erfinder: Sticker, Markus, 07749 Jena (DE); Konradi, Jakow, 78628 Rottweil (DE); Westphal, Peter, 07743 Jena (DE)
(74) Vertreter: Patentanwälte Geyer, Fehners & Partner mbB

(56) Entgegenhaltungen:
- US-A1- 2004 105 000
- US-A1- 2009 195 688
- BJ RN KEMPER ET AL: "Digital holographic microscopy for live cell applications and technical inspection", APPLIED OPTICS, OPTICAL SOCIETY OF AMERICA, WASHINGTON, DC; US, Bd. 47, Nr. 4, 1. Februar 2008 (2008-02-01), Seiten A52-A61, XP007904218, ISSN: 0003-6935, DOI: 10.1364/AO.47.000A52
- LIEBLING M ET AL: "Autofocus for digital Fresnel holograms by use of a Fresnelet-sparsity criterion", JOURNAL OF THE OPTICAL SOCIETY OF AMERICA A, OPTICAL SOCIETY OF AMERICA, US, Bd. 21, Nr. 12, 1. Dezember 2004 (2004-12-01), Seiten 2424-2430, XP007911916, ISSN: 1084-7529, DOI: 10.1364/JOSAA.21.002424
- PATRIK LANGEHANENBERG ET AL: "<title>Autofocus algorithms for digital-holographic microscopy</title>", PROCEEDINGS OF SPIE, Bd. 6633, 5. Juli 2007 (2007-07-05), Seiten 66330E-66330E-9, XP055050837, ISSN: 0277-786X, DOI: 10.1117/12.727784
- PATRIK LANGEHANENBERG ET AL: "Automated three-dimensional tracking of living cells by digital holographic microscopy", JOURNAL OF BIOMEDICAL OPTICS, Bd. 14, Nr. 1, 1. Januar 2009 (2009-01-01) , Seite 014018, XP055043026, ISSN: 1083-3668, DOI: 10.1117/1.3080133
- CUCHE E ET AL: "Simultaneous amplitude-contrast and quantitative phase-contrast microscopy by numerical reconstruction of Fresnel off-axis holograms", APPLIED OPTICS, OPTICAL SOCIETY OF AMERICA, WASHINGTON, DC; US, Bd. 38, Nr. 34, 1. Dezember 1999 (1999-12-01), Seiten 6994-7001, XP002313889, ISSN: 0003-6935, DOI: 10.1364/AO.38.006994

## Beschreibung

### Gebiet der Erfindung

Die Erfindung betrifft ein Verfahren zur Autofokussierung eines Mikroskops mit einem Mikroskopobjektiv auf einen ausgewählten Bereich einer Probe, bei dem von dem ausgewählten Bereich der Probe ein digitales Hologramm *off-axis* erzeugt wird.

### Stand der Technik

Um digitale Techniken in der Mikroskopie erfolgreich und effizient umsetzen zu können ist der Einsatz von Verfahren zur vollautomatisierten Aufnahme multimodaler mikroskopischer Datensätze ein wesentlicher Baustein. Nur die Verwendung solcher automatisierten Mikroskope ermöglicht eine schnelle und effiziente Digitalisierung einer größeren Anzahl mikroskopischer Präparate. Bei der Digitalisierung werden Proben - beispielsweise Gewebeschnitte auf Objektträgern - über größere Flächen mit einer Ausdehnung von beispielsweise 20x20 mm² abgetastet. Um eine hohe optische Auflösung des Abtastvorgangs - ein Bereich von 0,25 µm Durchmesser in der Probe sollte zu einem Pixel auf einem Flächendetektor korrespondieren - sicherstellen zu können wird das Objekt bzw. die abzutastende Fläche optisch in mehrere kleinere Bereiche, die als Kacheln oder *tiles* bezeichnet werden, unterteilt. Diese Kacheln werden einzeln aufgenommen und zu einem Gesamtbild (*tiled-image*) zusammengefügt. In der Regel ist es dabei jedoch so, dass die optimale Fokusposition, d.h. die Fokusposition bei welcher der ausgewählte Bereich der Probe am besten fokussiert ist und mit dem höchsten Kontrast abgebildet wird, aufgrund der Topographie der Probe variiert, so dass bei einer fehlenden Anpassung der Fokusposition verschiedene Bereiche verschieden scharf abgebildet werden, was sich im Gesamtbild störend bemerkbar macht.

Um die beste Fokusposition im Rahmen einer Autofokussierung bei Mikroskopen zu finden, sind im Stand der Technik verschiedene Verfahren bekannt.

Ein seit langem etabliertes Verfahren zur Autofokussierung, d.h. der automatischen Einstellung der besten Fokusposition, besteht darin, den Abstand zwischen dem Objektiv und Probenoberfläche zu verändern, also entweder die Probe auf einem Tisch oder das Objektiv entlang der optischen Achse des Objektivs bzw. ihrer Verlängerung, die im folgenden auch als z-Richtung bzw. z-Achse bezeichnet werden soll, zu verschieben. Die Abstandsänderung erfolgt dabei in der Regel in äquidistanten Schritten, bei jeder Position wird der Bildkontrast bestimmt. Die Position z_{F'} des Probentischs bzw. Objektivs, die zu dem Abstand korrespondiert, bei dem der Bildkontrast im aufgezeichneten Bild am größten ist, wird dann als Fokusposition gewählt. Um die Fokussierung weiter zu verbessern, kann auch zwischen den beiden Abständen mit dem höchsten Bildkontrast unter Berücksichtigung weiterer Punkte interpoliert werden, was als *Software-Autofokus* bezeichnet wird. Dieses Verfahren ist sehr einfach, weist jedoch den Nachteil auf, dass es auf Objektstrukturen angewiesen ist. Es funktioniert also nicht an strukturlosen Grenzflächen, wie beispielsweise einer sauberen Glasoberfläche oder einer glatt polierten Metalloberfläche. Hinzu kommt, dass das Verfahren auch relativ langsam arbeitet, da zahlreiche Abstände bzw. z-Positionen angefahren und dort Bilder aufgenommen und ausgewertet werden müssen. Für die Untersuchung lebender Zellen beispielweise ist dieses Verfahren nicht geeignet.

Sollen auch strukturlose Oberflächen automatisch fokussiert werden, so ist man auf ein Autofokusverfahren mit aktiver Beleuchtung angewiesen, was auch als *Hardware-Autofokus* bezeichnet wird. Der Autofokus-Sensor wird dabei im Stand der Technik auf unterschiedliche Weisen realisiert.

Ein erstes Verfahren besteht in der Triangulation. Dabei wird ein Lichtstrahl - in der Regel ein Laserstrahl - unter einem nicht senkrechten Winkel auf die Probenoberfläche geleitet. Mindestens ein Teil des Lichtstrahls wird auf der Probenoberfläche reflektiert, der Ort der Reflektion variiert mit der Verschiebung der Probe entlang der optischen Achse des Mikroskopobjektivs in z-Richtung, was mit einem ortsauflösenden Lichtdetektor registriert werden kann. Dieses Verfahren ist in der Regel jedoch nicht bei streuenden Proben anwendbar. Zudem muss der Ort, an dem der Lichtstrahl des Lasers in den Mikroskopstrahlengang eingekoppelt wird, für jedes Objektiv spezifisch angepasst werden, um den Fangbereich zu optimieren, da Mikroskopobjektive stark unterschiedliche Pupillendurchmesser aufweisen.

Ein weiteres Verfahren verwendet einen Konfokalsensor, was beispielsweise in der US 2008/002252 A1 beschrieben ist. Dabei wird ein Lichtstrahl - auch hier in der Regel ein Laserstrahl - kollimiert und kollinear zur Objektivachse in die Objektivpupille eingekoppelt, so dass er in der Fokusebene einen Punkt bildet. Bildseitig entsteht wieder ein Punkt, wenn sich die Probe - eine mindestens teilweise reflektierende Grenzfläche vorausgesetzt - in der Fokusebene befindet. Je weiter sich die Probe von der Fokusebene entfernt, desto mehr weitet sich der bildseitige Punkt auf. Die mit der Aufweitung verbundene Intensitätsabnahme kann als Autofokus-Signal verwendet werden. Um auch eine Richtungsinformation zu erhalten, kann beispielsweise der Laserstrahl im kollimierten Bereich auch halbseitig abgeschattet werden. Alternativ kann der Laserstrahl auch *off-axis*, d.h. nicht auf der optischen Achse liegend, eingekoppelt werden. Das Verfahren reagiert jedoch sehr empfindlich auf Störungen wie Schmutz, Kratzer oder Sprünge in der Reflexivität der Grenzfläche der Probe, an der der Strahl reflektiert wird. Der Fangbereich ist relativ klein, wenn die Genauigkeit hoch sein soll.

Ein weiteres, auf der Verwendung eines Konfokalsensors basierendes Verfahren mit den gleichen Nachteilen besteht in der Verwendung eines astigmatischen Sensors. Hier ist im Strahlengang zusätzlich eine Zylinderlinse angeordnet, über den astigmatischen Bildfehler kann die Richtungsinformation gewonnen werden.

In der EP 1 393 116 B1 wird ein Verfahren beschrieben, welches auf der Verwendung eines verkippten Konfokalspalts beruht. Dabei wird ein schmaler Lichtspalt auf die Probe abgebildet und bildseitig mit einem zur optischen Achse um weniger als 90° geneigten Zeilensensor detektiert. Dort, wo der Lichtspalt auf den Zeilensensor scharf abgebildet wird, ist die Intensität am höchsten. Die Richtungsinformation kann aus dem Intensitätsverlauf auf dem Zeilensensor gewonnen werden. Alternativ kann auch der Spalt statt des Zeilensensors verkippt werden. Auch dieses Verfahren benutzt die Reflektion des Lichtstrahls an einer Grenzfläche der Probe und ist daher empfindlich in Bezug auf Störungen wie Schmutz, Kratzer und Sprünge in der Reflexivität. Darüber hinaus ist auch die Justierung von Spalt und Zeilensensor aufwendig und für eine korrekte Messung entscheidend.

In der WO 2007/144197 A1 wird ein Autofokussystem beschrieben, welches auf einer verkippten Kamera mit einem Flächensensor basiert. Anstelle eines Lichtspalts wird hier ein möglichst feines Gitter flächig auf die Probe abgebildet und bildseitig mit einem zur optischen Achse um weniger als 90° geneigten Flächensensor, wie er in Digitalkameras verwendet wird, detektiert. Alternativ kann auch das Gitter verkippt werden, welches auch als Gitterspalt ausgelegt werden kann. Ausgewertet wird dabei nicht primär die Intensitätsverteilung auf dem Sensor, sondern der abgebildete Kontrast des Gitters. Dieses Verfahren ist weniger empfindlich in Bezug auf Störungen wie Schmutz oder Kratzer, stark streuende Proben stellen jedoch auch bei diesem Verfahren ein Problem dar und lassen sich nicht korrekt fokussieren.

Ein weiteres, relativ schnell arbeitendes, jedoch sehr aufwendiges Verfahren basiert auf der optischen Kohärenztomographie (*Optical Coherence Tomographie,* OCT) und einem dafür ausgelegten Sensor. Es handelt sich dabei um ein interferometrisches Verfahren, bei dem durch Verfahren entlang der z-Richtung mit hoher Geschwindigkeit ein sogenannter *A-Scan,* eine amplitudenmodulierte Abtastung vorgenommen wird und analysiert wird, wo die kurzkohärente Strahlungsquelle Interferenzen erzeugt. Alternativ kann auch das sogenannte Fourier-Domain-Verfahren angewendet werden, bei dem auf bewegte Teile verzichtet werden kann. Auf diese Weise können sowohl reflektierende als auch streuende Proben erfasst werden. Das Verfahren reagiert jedoch nachteilig sehr empfindlich auf Längenschwankungen im Referenzlichtstrahlengang und auch auf Dispersionsänderungen - beispielsweise bei Objektivwechsel - im gesamten Strahlengang.

Ein anderes Verfahren, welches in letzter Zeit an Bedeutung gewinnt, ist die sogenannte digitale holographische Mikroskopie, die zur nachträglichen numerischen Fokussierung eines aufgenommenen Objektes verwendet wird. Dabei wird ein Objekt für die holographische Aufnahme mit kohärentem Licht be- oder durchleuchtet. Das vom Objekt bzw. der Probe reflektierte bzw. gebeugte Licht, der - auch als Objektwelle bezeichnete - Objektlichtstrahl wird kohärent mit einem - auch als Referenzwelle bezeichneten - Referenzlichtstrahl überlagert. Das so erzeugte räumliche Interferogramm wird detektiert.

Bei der klassischen Holographie wird das Interferogramm auf einer Fotoplatte gespeichert. Die dort gespeicherte Intensitätsverteilung des Interferogramms enthält die komplette Information des von der Probe gestreuten Wellenfeldes. Die Rekonstruktion des Hologramms erfolgt durch die Beleuchtung des Hologramms mit einer Referenzwelle. Durch die Beugung des eingestrahlten Lichts an dem auf der Fotoplatte gespeicherten Interferenzmusters wird eine Wellenfront erzeugt, die mit der von der Probe kommenden Objektwelle, dem Objektlichtstrahl identisch ist.

Anstelle einer Fotoplatte verwendet man in der digitalen Holographie einen digitalen Bildsensor, beispielsweise einen CCD- oder einen CMOS-Sensor, mit dem das Interferenzbild aufgenommen wird. Es wird dann rechnerisch rekonstruiert. Bei der Anwendung der digitalen Holographie in der Mikroskopie wird eine simultane quantitative Bildgebung des Phasenkontrastes mehrerer fokaler Ebenen mit einer Auflösung entlang der optischen Achse z bis zu 5 nm ermöglicht. Befindet sich die Probe nicht in der Brennebene des Mikroskopobjektivs, lässt sich aus dem holographisch gewonnenen Datensatz die bestmögliche Fokusposition ermitteln. Dadurch wird eine numerische Refokussierung der Probe möglich. Es handelt sich also um eine numerische Methode zur Autofokussierung, bei der die Probe numerisch refokussiert wird, in dem das Bild der Probe in der fokalen Ebene des Mikroskopobjektivs aus dem schon aufgenommenen holographischen Bild berechnet und angezeigt wird.

### Beschreibung der Erfindung

Die Aufgabe der Erfindung besteht darin, ein schnelles Autofokussierungsverfahren zu entwickeln, welches sowohl für strukturierte als auch für strukturlose Proben einsetzbar und robuster als die bisher im Stand der Technik bekannten Verfahren ist.

Diese Aufgabe wird bei einem Verfahren der eingangs beschriebenen Art dadurch gelöst, dass anhand des digitalen Hologramms eine einzustellende Fokusposition entlang der optischen Achse z des Mikroskopobjektivs bestimmt wird, bei der sich der ausgewählte Bereich der Probe bestmöglich im Fokus befindet. Anschließend wird das Mikroskop über eine Ansteuerung auf die vorab bestimmte Fokusposition eingestellt, in dem beispielsweise der Tisch mit der Probe entsprechend verfahren wird, und so auf den ausgewählten Bereich fokussiert. Für die mikroskopische Bildgebung werden dann bevorzugt andere, im Stand der Technik übliche und von der digitalen Holographie unabhängige Verfahren verwendet, da die digitale Holographie im Allgemeinen eine Einschränkung der lateralen optischen Auflösung aufweist.

Dabei reicht die Aufnahme einer einzigen digital-holographischen Aufnahme bereits aus, um die bestmögliche Fokusposition in dem ausgewählten Bereich zu bestimmen, da sie bereits die komplette Tiefeninformation des ausgewählten Probenbereichs in der entsprechend ausgewählten Auflösung enthält, was für die Bestimmung der fokalen Ebene ausreicht. Falls die Probe Informationen in verschiedenen Tiefenpositionen enthält, so können auch diese mit dem Verfahren bestimmt werden. Es wird kein Abtastprozess entlang der z-Richtung benötigt, was das Verfahren erheblich beschleunigt. Im Unterschied zu anderen Interferenzverfahren ist auch kein Abgleich der optischen Weglängen notwendig. Darüber hinaus ist die Umsetzung dieses Verfahrens von der Konfiguration des Mikroskops unabhängig, insofern als sie für Auflicht- und Durchlichtmikroskope gleichermaßen anwendbar ist. Sowohl Phasenobjekte als auch Amplitudenobjekte als Proben sind gleichermaßen fokussierbar. Dabei ist es auch nicht notwendig, die interferometrische Überlagerung über einen längeren Zeitraum stabil zu halten, ein relativ kurzer Zeitraum, der die jeweilige Aufnahmezeit abdeckt, ist ausreichend. Während der Berechnung und der Einstellung der Fokusposition sowie der folgenden Aufnahme eines Bildes muss die Stabilität nicht aufrecht erhalten werden, das Teilsystem zur Aufnahme des digitalen Hologramms kann dann abgeschaltet werden.

Da bei dem erfindungsgemäßen Verfahren auf das aufwendige Abtasten entlang der z-Richtung verzichtet werden kann, ist dieses Verfahren besonders für die automatisierte Aufnahme multimodaler mikroskopischer Datensätze geeignet. In einer besonders bevorzugten Ausgestaltung des Verfahrens wird daher die Bestimmung der Fokusposition und die anschließende Fokussierung für mehrere ausgewählte Bereicht sequentiell vorgenommen. Dabei wird für jeden Bereich wie vorangehend beschrieben bei der bestimmten und eingestellten bestmöglichen Fokusposition ein Teilbild aufgenommen. Die Teilbilder werden anschließend zu einem Gesamtbild zusammengesetzt. Dabei können die Teilbilder zu einem Bild aus verschiedenen einzelnen Kacheln (*tiled-image*) zusammengesetzt werden, wobei alle Kacheln zusammen etwa einen Bereich von etwa 4 cm² der Probe abdecken. Bei transparenten Proben kann außerdem auch auf verschiedene Schichten in der Probe fokussiert werden, so dass auch ein Bildstapel entlang der optischen Achse z generiert werden kann. Beides lässt sich selbstverständlich miteinander kombinieren.

Für die Erzeugung des digitalen Hologramms wird Licht einer kohärenten Lichtquelle benötigt. Hier kann beispielsweise ein Laser verwendet werden, der Licht einer bestimmten Fokussierungswellenlänge emittiert. Das Licht wird über einen Strahlteiler in einen Objektlichtstrahl und einen Referenzlichtstrahl aufgespaltet, beide werden jeweils einzeln, beispielweise über eine Glasfaser in das Mikroskop eingekoppelt. Der Objektlichtstrahl wird nach seiner Einkopplung in das Mikroskop auf die Probe geleitet und von dieser letztendlich auf einen Fokussierungssensor. Dabei tritt der Objektlichtstrahl zunächst durch das Mikroskopobjektiv hindurch und wird wieder aus dem Mikroskopstrahlengang ausgekoppelt. Der Referenzlichtstrahl andererseits wird direkt auf den Fokussierungssensor gelenkt. Der Fokussierungssensor kann beispielsweise Teil einer CCD- oder CMOS-Kamera sein. Referenzlichtstrahl und Objektlichtstrahl werden dann überlagert und die Intensitätsversteilung des daraus resultierenden Interferogramms aufgrund der Wellenlängeneigenschaften des Lichts wird detektiert. Darüber hinaus wird auch die Intensitätsverteilung des Objektlichtstrahls und des Referenzlichtstrahls für sich allein genommen detektiert und entsprechend gespeichert. Die Überlagerung von Objektlichtstrahl und Referenzlichtstrahl erfolgt dabei *off-axis*, der Referenzlichtstrahl wird dabei unter einem kleinen Winkel zur Richtung des Objektlichtstrahls, die der Lotrechten des Fokussierungssensors entspricht, auf den Sensor gelenkt, so dass Referenzlichtstrahl und Objektlichtstrahl nicht mehr aus der gleichen Richtung kommen. Dies erhöht die Genauigkeit bei der späteren Analyse, da der Referenzlichtstrahl weniger stört. Auf diese Weise lassen sich die vollständigen räumlichen Informationen aus einem einzigen Hologramm extrahieren.

Zweckmäßig wird dabei für die Bestimmung der bestmöglichen Fokusposition die über die Ebene des Fokussierungssensors integrierte Amplitude der Intensität als Funktion der Position auf der optischen Achse z hinsichtlich des Vorliegens von Extrema ausgewertet. Anders ausgedrückt wird die räumlich integrierte Amplitude der einzelnen Objektebenen in diskreten Schritten als Funktion der Fokusposition ermittelt. Weist diese Funktion ein Extremum auf, so entspricht dieses einer bestmöglichen Fokusposition. Für den Fall, dass es sich bei der Probe um ein reines Amplitudenobjekt handelt, nimmt die integrierte Amplitude ein Minimum an, und für den Fall, dass die Probe ein reines Phasenobjekt ist, nimmt die integrierte Amplitude ein Maximum an. Dies trifft auch für den Fall von Proben mit kombinierten Eigenschafen zu, dabei kommt es darauf an, wie diese Proben untersucht werden sollen. Als einzustellende Fokusposition auf der optischen Achse z wird dann die Position ausgewählt, bei der die integrierte Amplitude ein Extremum annimmt. Diese Position wird sodann eingestellt.

Grundsätzlich lässt sich das gleiche Licht, welches für die Aufnahme des digitalen Hologramms verwendet wird, auch zur Beleuchtung der Probe für die Beobachtung, d.h. insbesondere auch die Bildaufnahme mittels eines anderen Verfahrens als der digitalen Holographie, einsetzen, was Komponenten spart. Eine höhere Flexibilität in der Anwendung erreicht man aber, wenn die Fokussierungswellenlänge einerseits und andererseits mindestens eine Beleuchtungswellenlänge, mit der die Probe zur Beobachtung beleuchtet wird, unterschiedlich gewählt werden. Das gleiche gilt auch für einen Beleuchtungswellenlängenbereich, mit dem die Probe in einem breiteren Spektralband beleuchtet werden kann. Man ist dabei nicht auf die einzelne Fokussierungswellenlänge fixiert, sondern kann die Probe auch in anderen Wellenlängenbereichen beobachten, die beispielsweise eine für das Auge angenehmere Beobachtung ermöglichen, oder sich mit anderen Analysemethoden kombinieren lassen. Selbstverständlich kann die Fokussierungswellenlänge auch im Beleuchtungswellenlängen-bereich liegen.

Für das erfindungsgemäße digital-holographische Autofokussierungs-Verfahren einerseits und für die Bildgebung einschließlich der Bildaufnahme im Rahmen der Beobachtung der Probe andererseits können sowohl unterschiedliche als auch identische Beleuchtungsquellen eingesetzt werden. Licht mit der Fokussierungswellenlänge wird zur Fokussierung der Probe verwendet, Licht mit der Beleuchtungswellenlänge oder mit Wellenlängen aus dem Beleuchtungswellenlängenbereich wird die Probe zur Beobachtung beleuchtet.

Bevorzugt wird der ausgewählte Bereich der Probe gleichzeitig mit Licht der Fokussierungswellenlänge und Licht der Beleuchtungswellenlänge bzw. aus dem Beleuchtungswellenlängenbereich beleuchtet, so dass die Autofokussierung während der Beobachtung erfolgen kann. Auf diese Weise muss nicht zwischen der Autofokussierung einerseits und der Bildaufnahme andererseits hin- und hergeschaltet werden, was den Verfahrensablauf bei der Aufnahme mehrerer Kacheln beispielsweise beschleunigt. Die Auswertung des digitalen Diagramms in der oben beschriebenen Weise kann dabei mit Hilfe moderner Prozessoren so schnell erfolgen, dass kaum Verzögerungen eintreten.

Das vorangehend beschriebene Verfahren eignet sich sowohl für die Durchlicht- als auch für die Auflichtmikroskopie. In beiden Fällen wird der Objektlichtstrahl zunächst auf die Probe und dann in einem Detektierungsstrahlengang des Mikroskops gelenkt. Im Detektierungsstrahlengang befindet sich auch das Mikroskopobjektiv, durch das der gebeugte Objektlichtstrahl hindurchtritt. Anschließend wird er aus dem Mikroskopstrahlengang ausgekoppelt und auf den Fokussierungssensor gelenkt. In einem Auflichtmikroskop wird der Objektlichtstrahl außerdem, bevor er auf die Probe trifft, in einen Beleuchtungsstrahlengang des Mikroskops eingekoppelt. Über diesen Beleuchtungsstrahlengang des Mikroskops wird auch die Probe mit Beleuchtungslicht einer Beleuchtungswellenlänge bzw. aus einem Beleuchtungswellenlängenbereich beleuchtet. In diesen Strahlengang wird der Objektlichtstrahl eingekoppelt, bevor er auf die Probe gelenkt wird.

Die Erfindung betrifft auch ein Mikroskop, welches insbesondere zur Durchführung des vorangehend beschriebenen Verfahrens geeignet ist. Dabei kann sowohl die Beobachtung der Probe im Auflicht- oder Durchlichtverfahren durchgeführt werden, es kann sich also um ein Durchlicht- oder Auflichtmikroskop handeln. Unabhängig davon, ob es sich um ein Auflicht- oder Durchlichtmikroskop handelt, kann auch die Beleuchtung der Probe mit dem Objektlichtstrahl im Auflicht- oder Durchlichtverfahren durchgeführt werden. Idealerweise lassen sich durch entsprechende Ausgestaltungen der Strahlwege und der Autofokussierungseinheit für die Aufnahme und ggf. Auswertung des digitalen Hologramms beide Verfahren an ein und demselben Mikroskop realisieren.

Ein solches Mikroskop, welches insbesondere zur Durchführung eines Verfahrens, wie es oben beschrieben wurde, geeignet ist, weist zunächst Autofokussierungsmittel zur Autofokussierung eines Mikroskopobjektivs auf einen ausgewählten Bereich der Probe auf. Es umfasst außerdem Mittel zur Erzeugung eines digitalen Hologramms des ausgewählten Bereichs, wobei das digitale Hologramm *off-axis* erzeugt wird. Das Mikroskop umfasst außerdem Mittel zur Auswertung des digitalen Hologramms derart, dass entlang der optischen Achse z des Mikroskopobjektivs die Lage der bestmöglichen Fokusposition in dem ausgewählten Bereich bestimmt wird. Diese Auswertung kann mit Hilfe im Stand der Technik bekannter Methoden zur Analyse von digitalen Hologrammen durchgeführt werden, die auch für die numerische Refokussierung verwendet werden. Das Mikroskop umfasst schließlich auch Mittel zur Ansteuerung derart, dass die vorangehend bestimmte bestmögliche Fokusposition am Mikroskop eingestellt wird. Das Ergebnis der Auswertung, nämlich die Lage der bestmöglichen Fokusposition wird an die Ansteuerung übermittelt, diese verstellt dann den Probentisch, bei dem es sich beispielweise um einen Kreuztisch handeln kann, in der Höhe, d.h. in z-Richtung, bis die korrekte Fokusposition eingestellt ist. Alternativ kann auch die Höhe des Objektivs verstellt werden.

Obwohl grundsätzlich das digitale Hologramm und die normale Beleuchtung der Probe zur Beobachtung die gleiche Beleuchtungslichtquelle, also die gleiche Lichtwellenlänge verwenden können, ist die Flexibilität und Einsatzmöglichkeit höher, wenn das Mikroskop einerseits eine Fokussierungslichtquelle, die kohärentes Fokussierungslicht einer Fokussierungswellenlänge abstrahlt, und andererseits eine Beleuchtungslichtquelle, die der Beleuchtung der Probe mit Beleuchtungslicht mindestens einer Beleuchtungswellenlänge oder mit Licht aus mindestens eines Beleuchtungswellenlängenbereichs dient, umfasst, wobei die Beleuchtung über einen Beleuchtungsstrahlengang erfolgt. Dabei ist nicht ausgeschlossen, dass beispielsweise die Fokussierungswellenlänge im Beleuchtungswellenlängenbereich liegt. In diesem Fall kann beispielsweise für die Aufnahme des digitalen Hologramms die Beleuchtungslichtquelle kurzzeitig abgeschaltet werden oder der entsprechende Strahlengang mit geeigneten Mitteln wie Filtern etc. für das Beleuchtungslicht undurchlässig gemacht werden. Eine andere Möglichkeit besteht darin, falls Beleuchtungswellenlänge und Fokussierungswellenlänge gleich sind, diese anhand ihrer Polarisation zu trennen.

Zur Erzeugung des digitalen Hologramms weist das Mikroskop zweckmäßig Mittel zur Aufteilung des Fokussierungslichtes in einem Objektlichtstrahl und in einem Referenzlichtstrahl auf. Der Objektlichtstrahl dient der Beleuchtung der Probe mit Fokussierungslicht. Der Referenzlichtstrahl wird direkt auf einen Fokussierungssensor gelenkt, der die Intensitäten von Objektlichtstrahl, Referenzlichtstrahl und der interferometrischen Überlagerung von Objektlichtstrahl und Referenzlichtstrahl dient. Außerdem umfasst das Mikroskop zweckmäßig Mittel zur Auskopplung des Objektlichtstrahls, wenn er von der Probe kommt, aus einem Detektierungsstrahlengang des Mikroskops auf, nachdem der Lichtstrahl das Mikroskopobjektiv durchlaufen hat. Nach der Auskopplung wird der Objektlichtstrahl auf den Fokussierungssensor gelenkt.

Für den Fall, dass die Bestimmung des digitalen Hologramms im Auflichtverfahren erfolgen soll, weist das Mikroskop außerdem auch Mittel zur Einkopplung des Objektlichtstrahls in den Beleuchtungsstrahlengang des Mikroskops auf, über den die Probe auch mit Beleuchtungslicht beleuchtet wird.

Die Mittel zur Auskopplung und, falls vorhanden bzw. wie für das Auflichtverfahren notwendig, die Mittel zur Einkopplung des Objektlichtstrahls können vorteilhaft auf verschiedene Weise ausgestaltet sein. Unterscheiden sich die Fokussierungswellenlänge und die Beleuchtungswellenlänge bzw. liegt die Fokussierungswellenlänge nicht im Beleuchtungswellenlängenbereich, so lassen sich vorteilhaft dichroitische Spiegel für die Ein- und Auskopplung verwenden. Die Filterfunktion der dichroitischen Spiegel wird dabei an die spektralen Charakteristika des Fokussierungslichts und des Beleuchtungslichts angepasst, so dass eine effiziente Ein- und Auskopplung des Fokussierungslichts ermöglicht wird. Da der Beleuchtungsstrahlengang in diesem Fall mindestens teilweise auch mit dem Detektierungsstrahlengang identisch ist, muss der entsprechende dichroitische Spiegel auch so ausgestaltet sein, dass Licht in einem entsprechenden Detektierungswellenlängenbereich oder mit einer bestimmten Detektierungswellenlänge detektiert wird, wobei diese sich von der Beleuchtungswellenlänge bzw. dem Beleuchtungswellenlängenbereich unterscheiden können.

Alternativ lassen sich auch Polarisationsstrahlteiler verwenden, wobei das Fokussierungslicht und das Beleuchtungslicht senkrecht zueinander polarisiert gewählt werden. In diesem Fall ist man auch flexibler, was die Wahl der Wellenlängen bzw. Wellenlängenbereiche für Fokussierung, Beleuchtung und Detektierung betrifft.

Es versteht sich, dass die vorstehend genannten und die nachstehend noch zu erläuternden Merkmale sowie die in den Ansprüchen genannten Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:
- Fig.1: eine bekannte Anordnung zur Aufnahme eines digitalen Hologramms im Auflichtverfahren,
- Fig.2: eine bekannte Anordnung zur Aufnahme eines digitalen Hologramms im Durchlichtverfahren,
- Fig.3: eine erste Ausgestaltung eines Mikroskops mit einer auf einem digitalen Hologramm basierenden Autofokussierung,
- Fig.4: eine zweite Ausgestaltung eines solchen Mikroskops,
- Fig.5: eine dritte Ausgestaltung eines solchen Mikroskops,
- Fig.6: eine vierte Ausgestaltung eines solchen Mikroskops,
- Fig.7: eine fünfte Ausgestaltung eines solchen Mikroskops und
- Fig.8: eine sechste Ausgestaltung eines solchen Mikroskops.

### Ausführliche Beschreibung der Zeichnungen

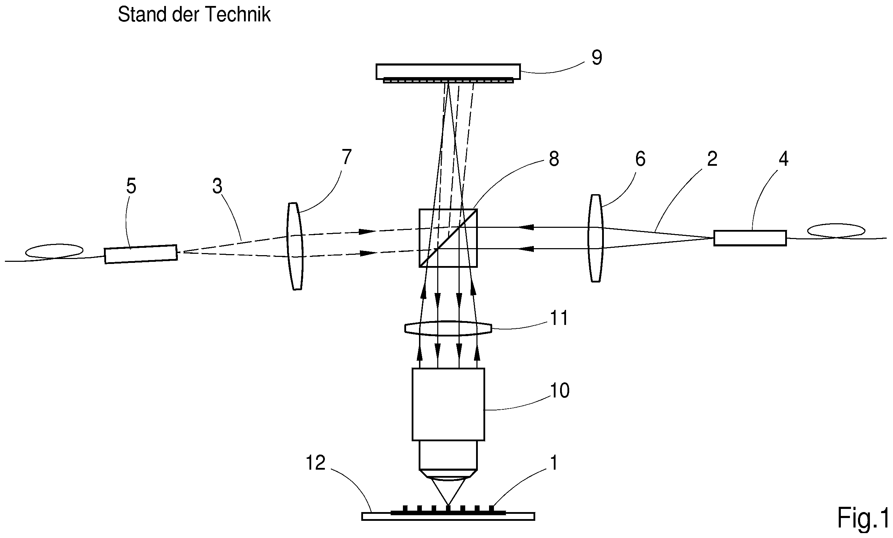

In Fig.1 ist der grundlegende Aufbau eines digital-holographischen Mikroskops dargestellt, welches zur Aufnahme eines digitalen Hologramms einer Probe 1 bzw. eines Bereichs davon dient. Die Auswertung erfolgt numerisch. Auch eine Refokussierung wird bei diesem System ausschließlich numerisch vorgenommen. Das hier gezeigte digital-holographische Mikroskop ist in einer Auflicht-Konfiguration realisiert. Licht einer externen oder internen kohärenten Strahlungsquelle, in der Regel eines Lasers, der hier nicht gezeigt ist, wird über einen ebenfalls nicht gezeigten Strahlteiler in einen Objektlichtstrahl 2 und einen Referenzlichtstrahl 3 aufgespaltet; beide werden jeweils einzeln über eine Glasfaser 4 bzw. 5 in das Mikroskop eingekoppelt. Hier und in den folgenden Zeichnungen ist der Referenzlichtstrahl 3 gestrichelt dargestellt, der Objektlichtstrahl mit durchgezogenen Linien. Die Strahlformung erfolgt jeweils mit abbildenden optischen Elementen 6 und 7.

Der in Fig.1 dargestellten Auflicht-Konfiguration liegt ein modifiziertes Michelson-Interferometer zugrunde. Objektlichtstrahl und Referenzlichtstrahl werden aus zwei einander gegenüber liegenden Richtungen auf einen gemeinsamen Stahlteiler 8 entlang zweier entgegengesetzter Interferometer-Arme gelenkt. Der Strahlteiler 8 lenkt die parallele Wellenfront des Referenzlichtstrahls 3 in Richtung eines Fokussierungssensors 9, welcher beispielsweise der digitale Bildssensor einer CCD- oder CMOS-Kamera sein kann. Der Objektlichtstrahl 2 wird in die entgegengesetzte Richtung auf die Probe 1, die in diesem Fall mindestens überwiegend das Licht reflektiert, geleitet. Zur Erstellung einer mikroskopischen Aufnahme eines ausgewählten Bereichs der Probe 1 wird eine Kombination aus einem Mikroskopobjektiv 10 und einer Tubuslinse 11 genutzt. Auf diese Weise wird die von der Probe gebeugte Objektwelle des Objektlichtstrahls 2, dargestellt durch entsprechende, von der Tubuslinse 11 weg in Richtung des Strahlteilers 8 weisender Pfeile, gesammelt und auf die Detektorfläche des Fokussierungssensors 8 abgebildet.

Die Probe 1 ist auf einem computergesteuerten Kreuztisch 12 gelagert, so dass sie sich zum einen wie gewünscht positionieren lässt und zum anderen in entsprechenden Bereichen, beispielsweise im Format kleiner Kacheln, abtasten lässt. Der Kreuztisch 12 kann aber auch manuell gesteuert sein. Der an der Probe 1 reflektierte Objektlichtstrahl 2 durchläuft den Strahlteiler 8 und wird kohärent mit dem Referenzlichtstrahl 3 auf der Detektorfläche des digitalen Fokussierungssensors 9 überlagert. Die Überlagerung erfolgt dabei *off-axis*, so dass der Referenzlichtstrahl 3 entlang einer Richtung auf den Fokussierungssensor 9 trifft, die mit der Lotrichtung des Sensors bzw. der dieser entsprechenden Richtung des Objektlichtstrahls 2 einen von Null verschiedenen Winkel einschließt. Grundsätzlich kann der Winkel zwischen 0° und 90° gewählt werden, wobei jedoch die Auflösung mit steigendem Winkel geringer wird. Vorteilhaft ist daher ein eher kleiner Winkel im Bereich von bis zu 20°. Die Intensitätsverteilung des aus dieser Überlagerung resultierenden Interferogramms wird detektiert und zusammen mit den Intensitätsverteilungen des reinen Objektlichtstrahls 2 bzw. des reinen Referenzlichtstrahls 3 in der Bildebene des Fokussierungssensors 9 aufgezeichnet.

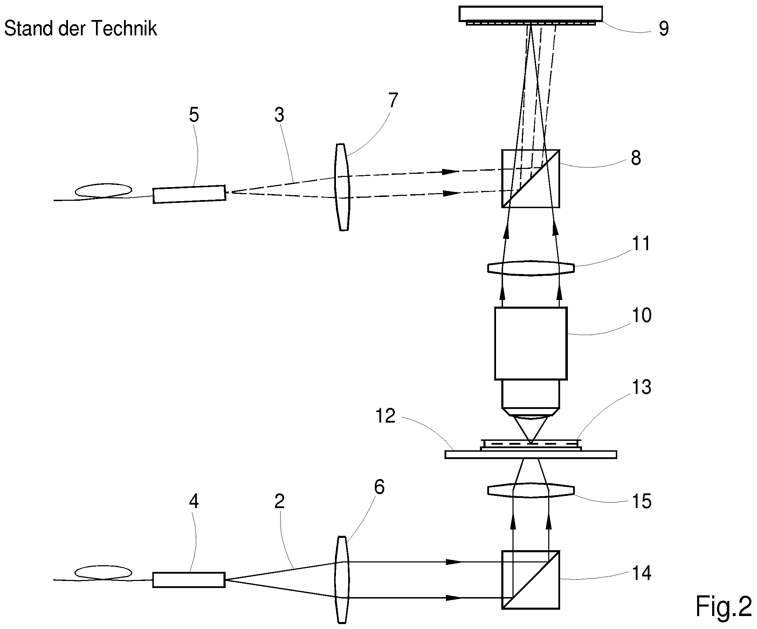

Fig.2 zeigt eine ähnliche Anordnung wie in Fig.1, die ebenfalls aus dem Stand der Technik bekannt ist. Im Gegensatz zu dem digital-holographischen Auflicht-Mikroskop aus Fig.1 zeigt Fig.2 jedoch ein digital-holographisches Durchlicht-Mikroskop. Im Unterschied zu Fig.1, wo der von der Probe kommende Objektlichtstrahl 2 an der Probe 1 reflektiert wurde, wird hier der Objektlichtstrahl 2 an einer transparenten Probe 13 gebeugt. Der Objektlichtstrahl 2 wird dazu über einen Strahlteiler 14, beispielsweise einen polarisierenden Strahlteiler, in den Beleuchtungsstrahlengang eines entsprechenden Durchlicht-Mikroskops eingekoppelt. Die Beleuchtung der Probe erfolgt mittels einer Kondensorlinse 15, die eine bestmögliche Ausleuchtung des Mikroskopobjektivs 10 durch die von der Probe 13 ausgehende Objektwelle des Objektlichtstrahls 2 ermöglicht. Diese durchläuft dann wieder die Tubuslinse 11 und wird mittels des Strahlteilers 8 mit dem Referenzlichtstrahl 3 auf der Detektorfläche des Fokussierungssensors 9 kohärent überlagert. Die Auswertung erfolgt entsprechend der im Zusammenhang mit Fig.1 genannten Vorgehensweise.

Die im Zusammenhang mit den Figuren 1 und 2 gezeigten Anordnungen lassen sich beispielsweise als Module in entsprechenden Auflicht- oder Durchlicht-Mikroskope integrieren.

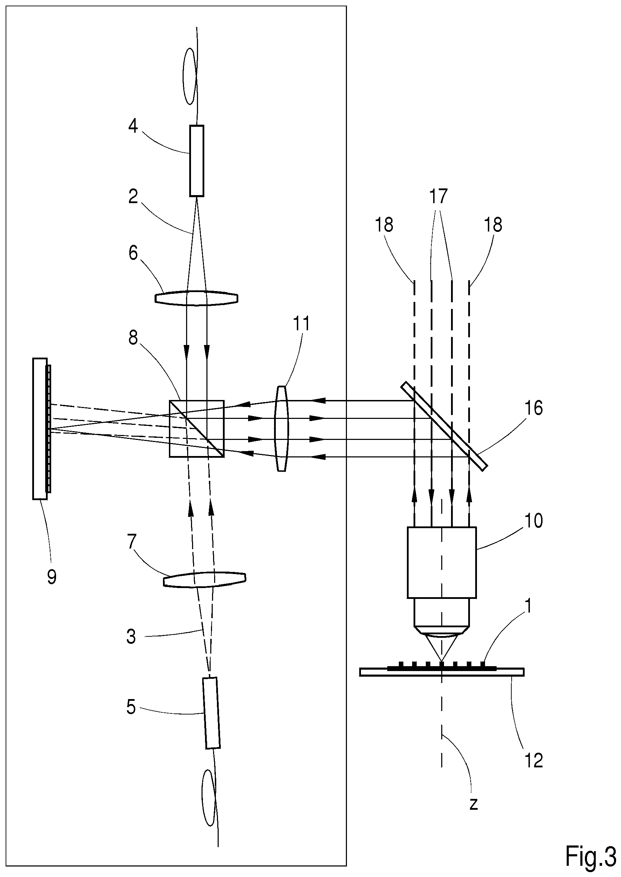

In Fig.3 ist ein Mikroskop, welches als Auflicht-Mikroskop konfiguriert ist, dargestellt, wobei jedoch auf die Darstellung der Beleuchtungs- und Detektierungsstrahlengänge sowie die dazugehörigen Optiken und Detektierungsmittel aus Gründen der Übersichtlichkeit soweit wie möglich verzichtet wurde. Sie sind selbstverständlich Teil eines solchen Mikroskops. Das Mikroskop weist Autofokussierungsmittel zur Autofokussierung des Mikroskopobjektivs 10 auf einen ausgewählten Bereich der Probe 1 auf. Die Mittel zur Autofokussierung in der Auflicht-Konfiguration, die im Zusammenhang mit Fig.1 beschrieben wurden, sind hier als Modul, gekennzeichnet durch den sie umgebenden Kasten, zusammengefasst. Das Mikroskop umfasst also Mittel zur Erzeugung eines digitalen Hologramms des ausgewählten Bereichs der Probe 1, wobei das Hologramm *off-axis* erzeugt wird. Es umfasst außerdem Mittel zur Auswertung des digitalen Hologramms derart, dass entlang der optischen Achse z des Mikroskopobjektivs bzw. ihrer Verlängerung die Lage der bestmöglichen Fokusposition in dem ausgewählten Bereich bestimmt wird. Es wird also anhand des digitalen Hologramms die einzustellende Fokusposition entlang der optischen Achse z bestimmt, wobei sich der ausgewählte Bereich bestmöglich im Fokus befindet. Bestmöglich bedeutet dabei, dass die sich numerisch ergebende beste Fokusposition eingestellt wird. Diese kann von der tatsächlich bestmöglichen Fokusposition noch geringfügig abweichen.

Für die Erzeugung des digitalen Hologramms wird, wie vorangehend beschrieben, Fokussierungslicht einer kohärenten Fokussierungslichtquelle mit einer Fokussierungswellen-länge in den Objektlichtstrahl 2 und dem Referenzlichtstrahl 3 aufgespaltet. Zur Bestimmung der bestmöglichen Fokusposition wird die über die Ebene des Fokussierungssensors 9 integrierte Amplitude der Intensität als Funktion der Position auf der optischen Achse z hinsichtlich des Vorliegens von Extrema ausgewertet. Dies erfolgt in der Regel in diskreten Schritten an Stützstellen, wobei für die bestmögliche Fokusposition auch interpoliert werden kann. Als einzustellende Fokusposition auf der optischen Achse z wird dann das entsprechende Extremum ausgewählt. Für die bestmögliche Fokusposition erreicht die räumlich integrierte Amplitude der entsprechenden Ebene ein Minimum im Falle eines reinen Amplitudenobjekts und ein Maximum, falls die Probe ein Phasenobjekt ist. Über Mittel zur Ansteuerung wird dann das Mikroskop auf die bestimmte bestmögliche Fokusposition eingestellt und auf diese Weise auf den ausgewählten Bereich fokussiert.

Die in Fig.3 und den folgenden Figuren gezeigten Ausgestaltungen eines Mikroskops weisen sämtlich Mittel zur Auskopplung des von der Probe kommenden Objektlichtstrahls 2 aus einem Detektierungsstrahlengang des Mikroskops nach dem Durchtreten durch das Mikroskopobjektiv 10 zur Lenkung auf den Fokussierungssensor 9 auf. Im Falle des in Fig.3 gezeigten Auflicht-Mikroskops weist dieses außerdem Mittel zur Einkopplung des Objektlichtstrahls 2 in den Beleuchtungsstrahlengang des Mikroskops auf.

Im vorliegenden Fall sind die Mittel zur Ein- bzw. Auskopplung des Objektlichtstrahls 2 identisch und umfassen einen dichroitischen Spiegel 16. Während das Licht der Fokussierungswellenlänge des Objektlichtstrahls 2 an dem dichroitischen Spiegel 16 reflektiert wird, tritt das von einer Beleuchtungslichtquelle über einen Beleuchtungsstrahlengang zur Beleuchtung der Probe abgestrahlte Beleuchtungslicht 17, welches bei einer Beleuchtungswellenlänge oder in einem Beleuchtungswellenlängenbereich abgestrahlt wird, ungehindert durch den Spiegel 16 hindurch. Auch das von der Probe reflektierte Detektierungslicht 18 tritt ungehindert durch den dichroitischen Spiegel 16 hindurch. Die Filterfunktion des Spiegels ist also an die spektralen Charakteristika der verwendeten Lichtquellen und an die Detektierung angepasst. Der Objektlichtstrahl 2 wird also in den Beleuchtungsstrahlengang des Mikroskops, über den die Probe 1 mit Licht der Beleuchtungswellenlänge oder aus dem Beleuchtungswellenlängen-bereich beleuchtet wird, eingekoppelt, bevor er auf die Probe 1 gelenkt wird, und wird anschließend in einen Detektierungsstrahlengang des Mikroskops gelenkt, aus dem er nach Durchtreten durch das Mikroskopobjektiv 10 ausgekoppelt und auf den Fokussierungssensor 9 gelenkt wird. Detektierungsstrahlengang und Beleuchtung im Falle des gezeigten Auflicht-Mikroskops ist teilweise identisch. Bei der Verwendung eines dichroitischen Spiegels 16 als Strahlteiler wählt man zweckmäßig die Fokussierungswellenlänge von der Beleuchtungs-wellenlänge verschieden bzw. nicht im Beleuchtungswellenlängenbereich liegend. Die Beleuchtung mit Beleuchtungslicht und die Beleuchtung mit dem Objektlichtstrahl 2 mit Licht der Fokussierungswellenlänge kann gleichzeitig erfolgen, so dass die Autofokussierung während der Beobachtung erfolgen kann bzw. unmittelbar im Anschluss an die Auto-fokussierung eine Aufnahme erfolgen kann.

Dabei kann die Bestimmung der Fokusposition und die anschließende Fokussierung für mehrere ausgewählte Bereiche der Probe sequentiell vorgenommen werden, wobei für jeden Bereich bei der bestimmten und eingestellten Fokusposition ein Teilbild aufgenommen wird und die Teilbilder zu einem Gesamtbild zusammengesetzt werden. Wenn die Teilbilder Kacheln eines in einer Ebene liegenden Bildes sind, so können diese zu einem Bild in einer zur optischen Achse z senkrechten Ebene zusammengesetzt werden. In jeder Kachel wird dann die für diesen Bereich bestmögliche Fokusposition eingestellt, so dass über die gesamte Ausdehnung des Gesamtbildes eine gleichmäßig hohe Qualität der Bildschärfe gewährleistet ist. Grundsätzlich ist es auch möglich, bei transparenten Proben Teilbilder zu einem Bildstapel entlang der optischen Achse z zusammenzusetzen.

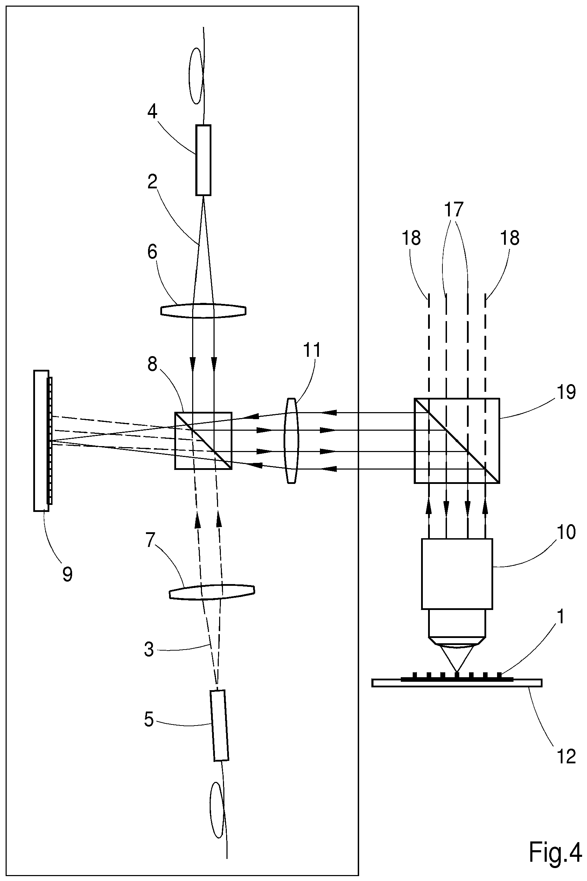

In Fig.4 ist eine Modifikation der in Fig.3 dargestellten Anordnung gezeigt. Die Ein- und Auskopplung des Objektlichtstrahls 2 in den Beleuchtungs- und Detektierungsstrahlengang des Mikroskops erfolgt hier mittels eines Polarisationsstrahlteilers 19. Dazu werden die Polarisationsrichtungen des Objektlichtstrahls 2 und des Beleuchtungslichtes 17 senkrecht zueinander gewählt. Dann ist grundsätzlich auch eine Beleuchtung und eine Fokussierung bei der gleichen Wellenlänge möglich.

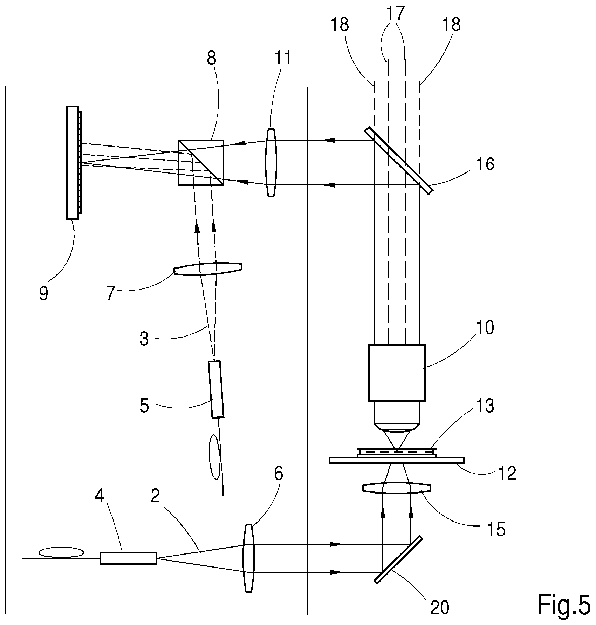

In Fig.5 wird die Autofokussierung ebenfalls an ein Auflicht-Mikroskop gekoppelt, welches jedoch eine transparente Probe 13 untersucht. Die Autofokussierung erfolgt allerdings im Durchlichtverfahren, wie sie im Zusammenhang mit Fig.2 beschrieben wurde. Der Objektlichtstrahl 2 wird über einen Spiegel 20 in Richtung der transparenten Probe 13 gelenkt wird. Mittels der Kondensorlinse 15 kann die Ausleuchtung des Mikroskopobjektivs 10 optimiert werden. Um den von der Probe 13 gebeugten Objektlichtstrahl 2 aus dem gemeinsamen Beleuchtungs- und Detektierungsstrahlengang des Mikroskops auszukoppeln, wird ein dichroitischer Spiegel 16 verwendet, wie er schon im Zusammenhang mit Abbildung 3 beschrieben wurde.

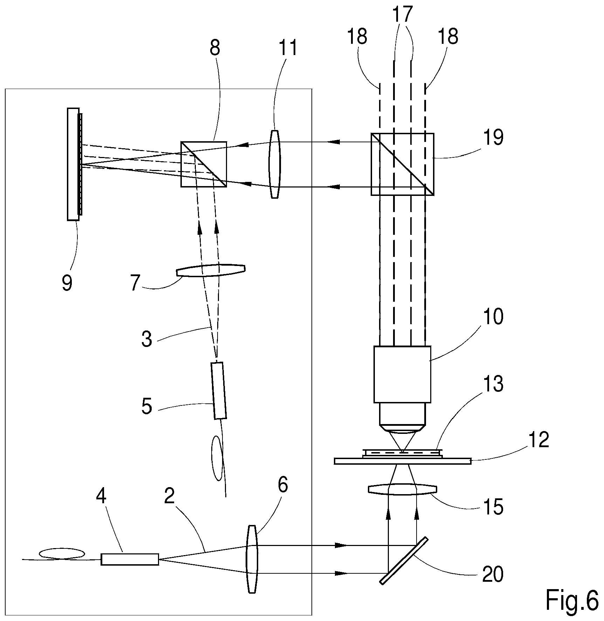

Fig.6 zeigt eine Modifikation der in Fig.5 gezeigten Anordnung, bei der der dichroitische Spiegel durch einen Polarisationsstrahlteiler 19 ersetzt wurde, was andere Einstellungsmöglichkeiten und -notwendigkeiten hinsichtlich des Fokussierungslichts und des Beleuchtungslichts mit sich bringt, wie oben schon beschrieben wurde.

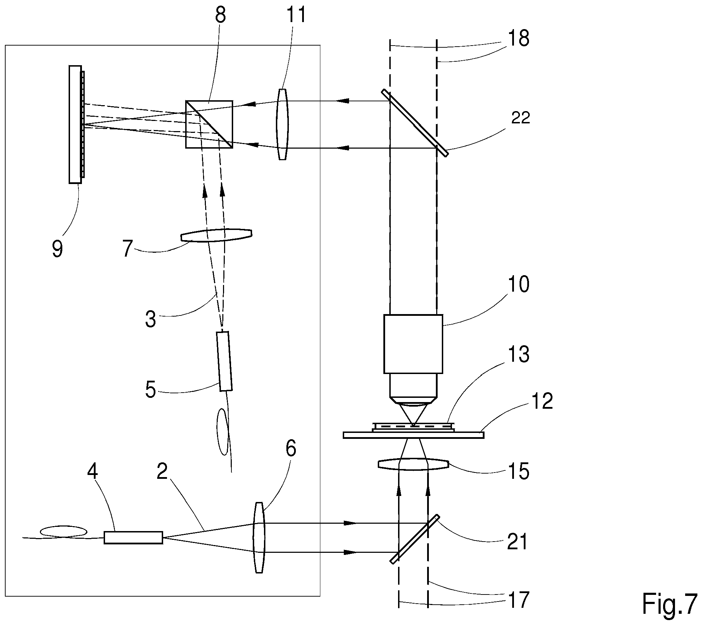

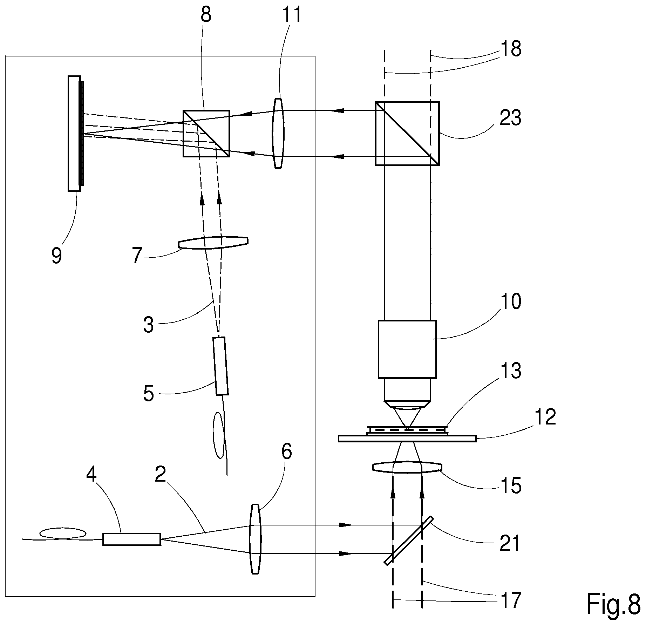

Bei dem in Fig.7 gezeigten Mikroskop sind sowohl die Mikroskopeinheit als auch die Fokussierungseinheit nach dem Durchlicht-Verfahren konzipiert. Zur Einkopplung des Objektlichtstrahls 2 in den Beleuchtungsstrahlengang wird nun anstelle eines normalen Spiegels ein dichroitischer Spiegel 21 verwendet. Die Auskopplung aus dem Detektierungsstrahlengang des Mikroskops erfolgt mittels eines weiteren dichroitischen Spiegels 22, oder wie in Fig.8 gezeigt, mittels eines Polarisationsstrahlteilers 23.

Mittels des vorangehend beschriebenen Verfahrens und der dafür verwendeten Mikroskope wird die bestmögliche Fokusposition eines ausgewählten Bildbereichs der Probe, basierend auf der Auswertung eines digitalen Hologramms dieses Bereichs ermöglicht. Auf eine Abtastung, wie sie im Stand der Technik notwendig ist, kann verzichtet werden, da eine einzige digital-holographische Aufnahme die komplette Tiefeninformation dieses Probenbereichs in der ausreichenden Auflösung enthält. Sie ist hinreichend für die Bestimmung der fokalen Ebene. Im Unterschied zu anderen Interferenzverfahren ist bei der beschriebenen Vorgehensweise kein Abgleich optischer Weglängen notwendig, was dieses Verfahren robuster als die im Stand der Technik bekannten Verfahren macht. Die Stabilität der interferometrischen Überlagerung wird nur über den Zeitraum benötigt, der für die Aufnahme des digitalen Hologramms notwendig ist.

### Bezugszeichenliste

- 1: Probe
- 2: Objektlichtstrahl
- 3: Referenzlichtstrahl
- 4, 5: Glasfaser
- 6, 7: optische Elemente
- 8: Strahlteiler
- 9: Fokussierungssensor
- 10: Mikroskopobjektiv
- 11: Tubuslinse
- 12: Kreuztisch
- 13: Probe
- 14: Strahlteiler
- 15: Kondensorlinse
- 16: dichroitischer Spiegel
- 17: Beleuchtungslicht
- 18: Detektierungslicht
- 19: Polarisationsstrahlteiler
- 20: Spiegel
- 21, 22: dichroitischer Spiegel
- 23: Polarisationsstrahlteiler

## Patentansprüche

1. Verfahren zur Autofokussierung eines Durchlicht- oder Auflichtmikroskops mit einem Mikroskopobjektiv (10) auf einen ausgewählten Bereich einer Probe (1, 13), bei dem
- von dem ausgewählten Bereich der Probe (1, 13) vor oder während einer Beobachtung ein digitales Hologramm off-axis erzeugt wird,
- anhand des digitalen Hologramms vor oder während der Beobachtung, welche mit einem anderen Verfahren als der digitalen Holographie erfolgt, eine einzustellende Fokusposition entlang der optischen Achse (z) des Mikroskopobjektivs (10) bestimmt wird, bei der sich der ausgewählte Bereich der Probe (1, 13) bestmöglich im Fokus befindet, und
- das Durchlicht- oder Auflichtmikroskop über eine Ansteuerung auf die bestimmte Fokusposition eingestellt und so auf den ausgewählten Bereich fokussiert wird.

2. Verfahren nach Anspruch 1, **dadurch gekennzeichnet, dass** die Bestimmung der Fokusposition und die anschließende Fokussierung für mehrere ausgewählte Bereiche der Probe (1, 13) sequentiell vorgenommen wird, wobei für jeden Bereich bei der bestimmten und eingestellten Fokusposition ein Teilbild aufgenommen wird und die Teilbilder zu einem Gesamtbild zusammengesetzt werden.

3. Verfahren nach Anspruch 2, **dadurch gekennzeichnet, dass** die Teilbilder zu einem Bildstapel entlang der optischen Achse (z) und / oder zu einem Bild in einer zur optischen Achse (z) senkrechten Ebene zusammengesetzt werden.

4. Verfahren nach einem der Ansprüche 1 bis 3, **dadurch gekennzeichnet, dass**
- für die Erzeugung des digitalen Hologramms Fokussierungslicht einer kohärenten Fokussierungslichtquelle mit einer Fokussierungswellenlänge in einen Objektlichtstrahl (2) und einen Referenzlichtstrahl (3) aufgespaltet wird, wobei der Objektlichtstrahl (2) auf die Probe (1, 13) und von dieser auf einen Fokussierungssensor (9) und der Referenzlichtstrahl (3) direkt auf den Fokussierungssensor (9) gelenkt wird, und wobei die Intensitäten sowohl des Referenzlichtstrahls (3) und des Objektlichtstrahls (2) einzeln als auch der Überlagerung von Referenzlichtstrahl (3) und Objektlichtstrahl (2) auf dem Fokussierungssensor (9) detektiert werden,
- bei der Bestimmung der bestmöglichen Fokusposition die über die Ebene des Fokussierungssensors (9) integrierte Amplitude der Intensität als Funktion der Position auf der optischen Achse (z) hinsichtlich des Vorliegens von Extrema ausgewertet wird, und als einzustellende Fokusposition auf der optischen Achse (z)
- für den Fall, dass die Probe (1, 13) ein Amplitudenobjekt ist, eine Position ausgewählt wird, bei der die integrierte Amplitude minimal ist, und
- für den Fall, dass die Probe (1, 13) ein Phasenobjekt ist, eine Position ausgewählt wird, bei der die integrierte Amplitude maximal ist.

5. Verfahren nach einem der Ansprüche 1 bis 4, **dadurch gekennzeichnet, dass** die Fokussierungswellenlänge einerseits und mindestens eine Beleuchtungswellenlänge oder mindestens ein Beleuchtungswellenlängenbereich zur Beleuchtung der Probe (1, 13) andererseits unterschiedlich gewählt werden.

6. Verfahren nach Anspruch 4 oder 5, **dadurch gekennzeichnet, dass** der ausgewählte Bereich der Probe (1, 13) gleichzeitig mit Licht der Fokussierungswellenlänge und Licht der Beleuchtungswellenlänge bzw. aus dem Beleuchtungswellenlängenbereich beleuchtet wird, so dass die Autofokussierung während der Beobachtung erfolgen kann.

7. Verfahren nach einem der Ansprüche 4 bis 6, **dadurch gekennzeichnet, dass** der Objektlichtstrahl (2) auf die Probe (1, 13) und in einen Detektierungsstrahlengang des Mikroskops gelenkt wird, aus dem er nach Durchtreten durch das Mikroskopobjektiv (10) ausgekoppelt und auf den Fokussierungssensor (9) gelenkt wird.

8. Verfahren nach Anspruch 7, **dadurch gekennzeichnet, dass** der Objektlichtstrahl (2) in einen Beleuchtungsstrahlengang des Mikroskops, über den die Probe (1, 13) mit Beleuchtungslicht (17) der Beleuchtungswellenlänge oder aus dem Beleuchtungswellenlängenbereich beleuchtet wird, eingekoppelt wird, bevor er auf die Probe (1, 13) gelenkt wird.

9. Mikroskop, welches als Durchlicht- oder Auflichtmikroskop ausgebildet ist, mit Autofokussierungsmitteln zur Autofokussierung eines Mikroskopobjektivs (10) auf einen ausgewählten Bereich einer Probe (1, 13), umfassend
- Mittel zur Erzeugung eines digitalen Hologramms des ausgewählten Bereichs off-axis vor oder während einer Beobachtung, welche mit einem anderen Verfahren als der digitalen Holographie erfolgt,
- Mittel zur Auswertung des digitalen Hologramms derart, dass entlang der optischen Achse (z) des Mikroskopobjektivs (10) die Lage der bestmöglichen Fokusposition in dem ausgewählten Bereich vor oder während der Beobachtung bestimmt wird, und
- Mittel zur Ansteuerung derart, dass die vorangehend bestimmte bestmögliche Fokusposition am Mikroskop eingestellt wird.

10. Mikroskop nach Anspruch 9, **dadurch gekennzeichnet, dass**
- das Mikroskop eine kohärentes Fokussierungslicht einer Fokussierungswellenlänge abstrahlende Fokussierungslichtquelle umfasst, und
- das Mikroskop mindestens eine Beleuchtungslichtquelle zur Beleuchtung der Probe (1, 13) mit Beleuchtungslicht (17) mindestens einer Beleuchtungswellenlänge oder Licht aus mindestens einem Beleuchtungswellenlängenbereich über einen Beleuchtungsstrahlengang umfasst.

11. Mikroskop nach Anspruch 10, **dadurch gekennzeichnet, dass** das Mikroskop
- Mittel zur Aufteilung des Fokussierungslichts in einen Objektlichtstrahl (2) zur Beleuchtung der Probe (1, 13) mit Fokussierungslicht und in einen Referenzlichtstrahl (3),
- einen Fokussierungssensor (9) zur Detektierung der Intensitäten von Objektlichtstrahl (2), Referenzlichtstrahl (3) und deren Überlagerung, und
- Mittel zur Auskopplung des von der Probe (1, 13) kommenden Objektlichtstrahls (2) aus einem Detektierungsstrahlengang des Mikroskops nach dem Durchtreten durch das Mikroskopobjektiv (10) zur Lenkung auf den Fokussierungssensor (9) umfasst.

12. Mikroskop nach Anspruch 10 oder 11, **dadurch gekennzeichnet, dass** es Mittel zur Einkopplung des Objektlichtstrahls (2) in den Beleuchtungsstrahlengang des Mikroskops, über den die Probe (1, 13) auch mit Beleuchtungslicht (17) beleuchtet wird, umfasst.

13. Mikroskop nach Anspruch 11 oder 12, **dadurch gekennzeichnet, dass** die Mittel zur Auskopplung und, falls vorhanden, die Mittel zur Einkopplung des Objektlichtstrahls (2) dichroitische Spiegel (16, 21, 22) oder Polarisationsstrahlteiler (19, 23) umfassen.

## Claims

1. Method for autofocusing a transmitted-light or reflected-light microscope with a microscope objective (10) on a selected area of a sample (1, 13), in which
- a digital hologram of the selected area of the sample (1, 13) is generated off-axis before or during an observation,
- with reference to the digital hologram before or during the observation which is carried out with a method other than digital holography, a focus position to be set along the optical axis (z) of the microscope objective (10) is determined, in which the selected area of the sample (1, 13) is optimally in focus, and
- the transmitted-light or reflected-light microscope is set to the determined focus position via a control, and thus focused on the selected area.

2. Method according to claim 1, **characterized in that** the determination of the focus position and the subsequent focusing is carried out sequentially for several selected areas of the sample (1, 13), wherein a partial image is taken for each area in the determined and set focus position and the partial images are put together to form an overall image.

3. Method according to claim 2, **characterized in that** the partial images are put together to form an image stack along the optical axis (z) and/or to form an image in a plane perpendicular to the optical axis (z).

4. Method according to one of claims 1 to 3, **characterized in that**,
- for producing the digital hologram, focusing light from a coherent focusing light source with a focusing wavelength is split into an object light beam (2) and a reference light beam (3), wherein the object light beam (2) is directed onto the sample (1, 13) and from this onto a focusing sensor (9), and the reference light beam (3) is directed directly onto the focusing sensor (9), and wherein the intensities both of the reference light beam (3) and the object light beam (2) individually and of the superimposition of the reference light beam (3) and the object light beam (2) on the focusing sensor (9) are detected,
- when determining the optimum focus position, the amplitude of the intensity integrated over the plane of the focusing sensor (9) is evaluated as a function of the position on the optical axis (z) with respect to the presence of extreme values, and as focus position to be set on the optical axis (z)
- in the case where the sample (1, 13) is an amplitude object a position is selected in which the integrated amplitude is minimal and
- in the case where the sample (1, 13) is a phase object a position is selected in which the integrated amplitude is maximal.

5. Method according to one of claims 1 to 4, **characterized in that** the focusing wavelength on the one hand and at least one illumination wavelength or at least one illumination wavelength range for illuminating the sample (1, 13) on the other hand are selected differently.

6. Method according to claim 4 or 5, **characterized in that** the selected area of the sample (1, 13) is illuminated simultaneously with light of the focusing wavelentth and light of the illumination wavelength or from the illumination wavelength range, with the result that the autofocusing can take place during the observation.

7. Method according to one of claims 4 to 6, **characterized in that** the object light beam (2) is directed onto the sample (1, 13) and into a detection beam path of the microscope, out of which, after passing through the microscope objective (10), it is coupled and directed onto the focusing sensor (9).

8. Method according to claim 7, **characterized in that** the object light beam (2) is coupled into an illumination beam path of the microscope, via which the sample (1, 13) is illuminated with illumination light (17) of the illumination wavelength or from the illumination wavelength range, before it is directed onto the sample (1,13).

9. Microscope which is formed as a transmitted-light or reflected-light microscope, with autofocusing means for autofocusing a microscope objective (10) on a selected area of a sample (1, 13), comprising
- means for generating a digital hologram of the selected area off-axis before or during an observation, which is carried out with a method other than digital holography,
- means for evaluating the digital hologram such that, along the optical axis (z) of the microscope objective (10), the location of the optimum focus position in the selected area is determined before or during the observation, and
means for control, such that the previously determined optimum focus position is set on the microscope.

10. Microscope according to claim 9, **characterized in that**
- the microscope comprises a focusing light source emitting coherent focusing light of a focusing wavelength and
- the microscope comprises at least one illumination light source for illuminating the sample (1, 13) with illumination light (17) of at least one illumination wavelength or light from at least one illumination wavelength range via an illumination beam path.

11. Microscope according to claim 10, **characterized in that** the microscope comprises
- means for splitting the focusing light into an object light beam (2) for illuminating the sample (1, 13) with focusing light and into a reference light beam (3),
- a focusing sensor (9) for detecting the intensities of object light beam (2), reference light beam (3) and the superimposition thereof, and
- means for coupling the object light beam (2) coming from the sample (1, 13) out of a detection beam path of the microscope after passing through the microscope objective (10) for direction onto the focusing sensor (9).

12. Microscope according to claim 10 or 11, **characterized in that** it comprises means for coupling the object light beam (2) into the illumination beam path of the microscope, via which the sample (1, 13) is also illuminated with illumination light (17).

13. Microscope according to claim 11 or 12, **characterized in that** the means for coupling out and, if present, the means for coupling in the object light beam (2) comprise dichroic mirrors (16, 21, 22) or polarizing beam splitters (19, 23).

## Revendications

1. Procédé pour la mise au point automatique d'un microscope à transmission ou à réflexion doté d'un objectif de microscope (10) sur une zone choisie d'un échantillon (1, 13), dans lequel
- un hologramme numérique de la zone choisie de l'échantillon (1, 13) est généré en configuration off-axis avant ou pendant une observation,
- à l'aide de l'hologramme numérique, avant ou pendant l'observation, qui est effectuée selon un autre procédé que l'holographie numérique, une position de mise au point à régler est déterminée le long de l'axe optique (z) de l'objectif de microscope (10), dans laquelle la zone choisie de l'échantillon (1,13) se trouve le mieux possible dans le foyer, et
- le microscope à transmission ou à réflexion est réglé par le biais d'une commande sur la position de mise au point déterminée et ainsi mis au point sur la zone choisie.

2. Procédé selon la revendication 1, **caractérisé en ce que** la détermination de la position de mise au point et la mise au point subséquente sont effectuées de manière séquentielle pour plusieurs zones choisies de l'échantillon (1, 13), dans lequel, pour chaque zone, un segment d'image est photographié dans la position de mise au point déterminée et réglée et les segments d'image sont assemblés en une image complète.

3. Procédé selon la revendication 2, **caractérisé en ce que** les segments d'image sont assemblés en une pile d'images le long de l'axe optique (z) et/ou en une image dans un plan perpendiculaire à l'axe optique (z).

4. Procédé selon une des revendications 1 à 3, **caractérisé en ce que**,
- pour la génération de l'hologramme numérique, de la lumière de mise au point d'une source de lumière de mise au point cohérente avec une longueur d'onde de mise au point est divisée en un rayon lumineux d'objet (2) et un rayon lumineux de référence (3), le rayon lumineux d'objet (2) étant dirigé vers l'échantillon (1, 13) et par celui-ci vers un capteur de mise au point (9) et le rayon lumineux de référence (3) étant dirigé directement vers le capteur de mise au point (9), et les intensités aussi bien du rayon lumineux de référence (3) et du rayon lumineux d'objet (2) individuellement que de la superposition du rayon lumineux de référence (3) et du rayon lumineux d'objet (2) sur le capteur de mise au point (9) étant détectées,
- lors de la détermination de la meilleure position de mise au point possible, l'amplitude de l'intensité intégrée sur le plan du capteur de mise au point (9) est évaluée comme fonction de la position sur l'axe optique (z) en ce qui concerne la présence de valeurs extrêmes, et comme position de mise au point à régler sur l'axe optique (z)
- dans le cas où l'échantillon (1, 13) est un objet d'amplitude, une position dans laquelle l'amplitude intégrée est minimale est choisie, et
- dans le cas où l'échantillon (1, 13) est un objet de phase, une position dans laquelle l'amplitude intégrée est maximale est choisie.

5. Procédé selon une des revendications 1 à 4, **caractérisé en ce que** la longueur d'onde de mise au point d'une part et au moins une longueur d'onde d'éclairage ou au moins une plage de longueurs d'onde d'éclairage pour l'éclairage de l'échantillon (1, 13) d'autre part sont choisies différentes.

6. Procédé selon la revendication 4 ou 5, **caractérisé en ce que** la zone choisie de l'échantillon (1, 13) est éclairée en même temps au moyen de lumière de la longueur d'onde de mise au point et de lumière de la longueur d'onde d'éclairage ou de la plage de longueurs d'onde d'éclairage, de telle sorte que la mise au point automatique peut être effectuée pendant l'observation.

7. Procédé selon une des revendications 4 à 6, **caractérisé en ce que** le rayon lumineux d'objet (2) est dirigé vers l'échantillon (1, 13) et dans un trajet de faisceau de détection du microscope, duquel il est sorti après le passage par l'objectif de microscope (10) et dirigé vers le capteur de mise au point (9).

8. Procédé selon la revendication 7, **caractérisé en ce que** le rayon lumineux d'objet (2) est injecté dans un trajet de faisceau d'éclairage du microscope, par le biais duquel l'échantillon (1, 13) est éclairé au moyen de lumière d'éclairage (17) de la longueur d'onde d'éclairage ou de la plage de longueurs d'onde d'éclairage, avant d'être dirigé vers l'échantillon (1, 13).

9. Microscope, qui se présente sous la forme d'un microscope à transmission ou à réflexion, comprenant des moyens de mise au point automatique pour la mise au point automatique d'un objectif de microscope (10) sur une zone choisie d'un échantillon (1, 13), comprenant
- des moyens destinés à générer un hologramme numérique de la zone choisie en configuration off-axis avant ou pendant une observation, qui est effectuée selon un autre procédé que l'holographie numérique,
- des moyens destinés à évaluer l'hologramme numérique de telle manière que, le long de l'axe optique (z) de l'objectif de microscope (10), l'emplacement de la meilleure position de mise au point possible dans la zone choisie est déterminé avant ou pendant l'observation, et
- des moyens destinés à la commande de telle manière que la meilleure position de mise au point possible déterminée précédemment est réglée sur le microscope.

10. Microscope selon la revendication 9, **caractérisé en ce que**
- le microscope comprend une source de lumière de mise au point émettant une lumière de mise au point cohérente d'une longueur d'onde de mise au point, et
- le microscope comprend au moins une source de lumière d'éclairage destinée à l'éclairage de l'échantillon (1, 13) au moyen de lumière d'éclairage (17) d'au moins une longueur d'onde d'éclairage ou de lumière d'au moins une plage de longueurs d'onde d'éclairage par le biais d'un trajet de faisceau d'éclairage.

11. Microscope selon la revendication 10, **caractérisé en ce que** le microscope comprend
- des moyens destinés à diviser la lumière de mise au point en un rayon lumineux d'objet (2) pour l'éclairage de l'échantillon (1, 13) au moyen de lumière de mise au point et en un rayon lumineux de référence (3),
- un capteur de mise au point (9) destiné à détecter les intensités du rayon lumineux d'objet (2), du rayon lumineux de référence (3) et de leur superposition, et
- des moyens destinés à sortir le rayon lumineux d'objet (2) venant de l'échantillon (1, 13) d'un trajet de faisceau de détection du microscope après le passage par l'objectif de microscope (10) pour le diriger vers le capteur de mise au point (9).

12. Microscope selon la revendication 10 ou 11, **caractérisé en ce qu'**il comprend des moyens destinés à injecter le rayon lumineux d'objet (2) dans le trajet de faisceau d'éclairage du microscope, par le biais duquel l'échantillon (1, 13) est également éclairé au moyen de lumière d'éclairage (17).

13. Microscope selon la revendication 11 ou 12, **caractérisé en ce que** les moyens de sortie et, le cas échéant, les moyens d'injection du rayon lumineux d'objet (2) comprennent des miroirs dichroïques (16, 21, 22) ou des séparateurs de faisceau à polarisation (19, 23).
